# EUROPEAN PATENT APPLICATION

(11) **EP 4 727 111 A1**
(43) Date of publication of application: **15.04.2026**
(21) Application number: 25204392.2
(22) Date of filing: 24.09.2025
(51) Int. Cl.: H04N 1/60

(54) **UNIFORMITY CORRELATION WITH A SPECTRO-CAMERA**

(30) Priority: 09.10.2024 ES 202430814
(71) Applicant: Electronics for Imaging, Inc., Londonderry, NH 03053 (US)
(72) Inventor: Ruiz de Conejo Viloria, Ignacio, 12004 Almazora, Castellón (ES); Escudero González, Juan, 12004 Almazora, Castellón (ES); Verdiell, Jordi, 12004 Almazora, Castellón (ES)
(74) Representative: Stöckeler, Ferdinand

(57) **Abstract**

Apparatuses, methods, and systems for achieving uniform density in solid areas of an image printed by multiple printheads having multiple nozzles are disclosed. A printing system receives a print job that includes solid color areas associated with uniform color values. An array is determined, where the array maps the uniform color values to density values measured using a spectrophotometer. Using this array, a template is obtained from a raster image processor of the printing system to map the density values to intensity values for the printer nozzles. The template is used to determine the intensity value for each nozzle based on the corresponding uniform color value's density. The printing system prints the image according to the determined intensity values, achieving uniform color distribution across the printed image.

## Description

### TECHNICAL FIELD

The embodiments described herein relate generally to printing systems. More particularly, the embodiments relate to methods of achieving uniform density in solid areas of an image printed by multiple printheads having multiple nozzles.

### BACKGROUND

Inkjet printing technology involves the precise ejection of ink droplets from nozzles onto a substrate. The printheads are typically arranged in a linear or staggered configuration to cover the entire width of the printing area. Each printhead contains numerous nozzles, which can range from a few dozen to several thousand, depending on the printer's design and intended use. Solid area printing, a process of printing large, continuous areas of color or tone without any gaps or interruptions, is particularly challenging in inkjet systems. Density variation in solid areas can be due to manufacturing variability or any other cause, each of which can generate color differences for which it is desired to be measured and corrected.

### SUMMARY

Introduced here are systems and approaches for achieving uniform density in solid areas of an image printed by multiple printheads having multiple nozzles. In some embodiments, a printing system receives a print job that includes a set of solid color areas of the image to be printed by a set of printer nozzles. The set of solid color areas is associated with a set of uniform color values. An array is determined, where the array includes one or more mappings of the set of uniform color values to a set of density values, which are measured using a spectrophotometer. Using the determined array, the printing system obtains a template from a raster image processor of the printing system. The template maps the set of density values for the uniform color values to a set of intensity values for the printer nozzles. The obtained template is used to determine an intensity value for each printer nozzle based on the density value of a corresponding uniform color value of each solid color area. As a result, the printing system prints the image in accordance with the determined intensity values of the set of printer nozzles.

Systems of exemplary embodiments herein include a first printing system determining an array by utilizing a second printing system to print a set of targets, each defined by a color value. The second system measures these targets using embedded sensors and a spectrophotometer to obtain spectral measurements, which are converted to density values. The array is generated by aggregating the color values with their corresponding density values. The method includes smoothing and interpolating these values to reduce noise and align with predetermined values, resulting in a three-dimensional look-up table. The array, stored within a raster image processor of the printing system, includes multiple bands containing densities for each color channel (red, green, blue). The raster image processor evaluates the intensity value for each printer nozzle based on these bands, with the array encoded in a binary format.

These and other aspects, features, and implementations can be expressed as methods, apparatus, systems, components, program products, means or steps for performing a function, and in other ways. These and other aspects, features, and implementations will become apparent from the following descriptions, including the claims.

### BRIEF DESCRIPTION OF THE DRAWINGS

Figure 1 is a block diagram illustrating a perspective view of a printing system, in accordance with one or more embodiments.
Figure 2 is a block diagram illustrating a side view of a printing system, including a printer head and a light source, in accordance with one or more embodiments.
Figure 3 is a drawing illustrating an example environment for printing solid areas, in accordance with one or more embodiments.
Figure 4 is a drawing illustrating an example color template for detecting the solid areas, in accordance with one or more embodiments.
Figure 5 is a drawing illustrating an example look-up table, in accordance with one or more embodiments.
Figure 6 is a flow diagram illustrating a process for achieving uniform density in the solid areas, in accordance with one or more embodiments.
Figure 7 is a block diagram illustrating an example computer system, in accordance with one or more embodiments.

### DETAILED DESCRIPTION

In the following description, for the purposes of explanation, numerous specific details are set forth in order to provide a thorough understanding of the present embodiments. It will be apparent, however, that the present embodiments may be practiced without these specific details.

This document presents systems, methods, and apparatus for achieving uniform density in solid areas of an image printed by a plurality of printheads with a plurality of nozzles each. Conventional methods for compensating color differences in printing systems typically integrate a spectrophotometer into the printer to measure solid patches with different ink coverages and derive the necessary ink adjustments. While this method provides accurate spectral measurements, integrating a spectrophotometer into the printer is costly due to the high price of spectrophotometers and is only feasible for multi-pass printers where the sensor can scan the entire printing width. Conventional methods can also include, for single-pass printers, a series of sensors (scanners or cameras) to approximate color density using Red, Blue, and Green (RGB) values. However, this method is less precise as it relies on non-spectral values, leading to only approximate estimations of color density. Consequently, the effectiveness of conventional methods is sometimes limited.

The embodiments disclosed herein present methods for receiving a print job that includes solid color areas associated with uniform color values. An array is determined, where the array maps the uniform color values to density values measured using a spectrophotometer. A template is obtained from a raster image processor to map the density values to intensity values for the printer nozzles. The template is used to determine the intensity value for each nozzle based on the corresponding uniform color value's density and allows the printing system to print the image accordingly.

The advantages and benefits of the method of achieving uniform density in solid areas of an image using the embodiments described herein include improved color accuracy and consistency, reduced printing artifacts such as banding and color shifts, and improved overall print quality. By using a spectrophotometer to obtain more accurate spectral measurements and directly converting the spectral measurements to density values but without having to include the spectrophotometer physically in the printing system that is printing the image, the method ensures that each nozzle's intensity is accurately calibrated to the corresponding color value. Storing the accurate spectral measurements in a three-dimensional look-up table (e.g., an array) allows the printing system to reference the spectral measurements and print a uniform color distribution across the printed image without the need to include a spectrophotometer in the printing system itself or rely on less accurate estimations. This allows for greater flexibility in the choice of printing hardware and configurations.

### Printing System

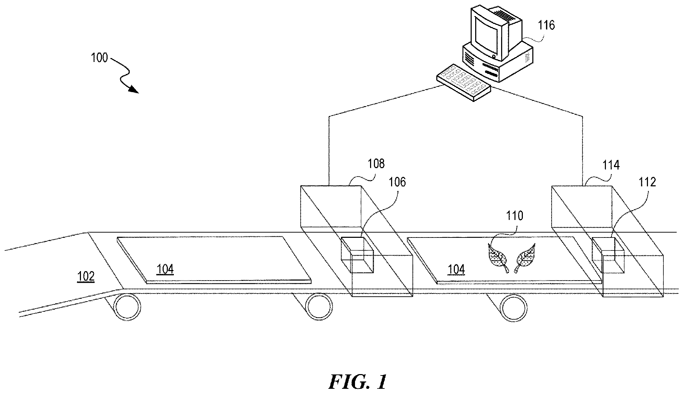

Figure 1 is a block diagram illustrating a perspective view of a printing system 100, in accordance with one or more embodiments. The printing system 100 includes a printer head 106, at least one light source 112, and a transfer belt 102. Embodiments may also include other components, e.g., a dryer. For example, the light source 112 is present in some embodiments, but not in others. As another example, a dryer is included if an image 110 will not be quickly transferred to a garment. In some examples, while the printing system 100 of Figure 1 includes a transfer belt 102, other means for conveying and/or retaining a substrate or transfer material 104 can also be used, such as a rotating platform or stationary bed.

The printer head 106 is configured to deposit ink onto a transfer material 104 in the form of an image 110. The transfer material 104, which also referred to herein as a former material, is flexible, which allows the image 110 to be transferred to complex-shaped substrates. In one example, the transfer material 104 is a rubber former, a thermoformable material, etc. In some embodiments, the printer head 106 is an inkjet printer head that jets ink onto the transfer material 104 using, for example, piezoelectric nozzles. Thermal printer heads are generally avoided in an effort to avoid premature sublimation of the ink. In some embodiments, the ink is a solid energy, e.g., UV curable ink. However, other inks are also used, such as water-based energy curable inks or solvent-based energy curable inks. According to different embodiments, ink is deposited in different forms, such as ink droplets and colored polyester ribbons.

In some embodiments, one or more light sources 112 cure some or all of the ink deposited onto the transfer material 104 by emitting UV radiation. In some examples, the light source(s) 112 is any combination of UV fluorescent bulbs, UV light emitting diodes (LEDs), low-pressure, e.g., mercury (Hg), bulbs, or excited dimer (excimer) lamps and/or lasers. Various combinations of these light sources could be used. In some examples, a printing system 100 includes a low-pressure Hg lamp and a UV LED. The light source 112 may be configured to emit UV radiation of a particular subtype.

The printer head 106 and light source 112 are illustrated as being directly adjacent to one another, i.e., neighboring without any intervening components. However, in other embodiments, additional components that assist in printing, curing, etc., are also present. In some examples, multiple distinct light sources 112 is positioned behind the printer head 106. Figure 1 illustrates one possible order in which components are arranged in order to print an image 110 onto the transfer material 104. Other embodiments are considered in which additional components are placed before, between, or after the illustrated components, etc.

In some embodiments, one or more of the aforementioned components are housed within one or more stations. For example, the printer head 106 is housed within a printing station 108, the light source 112 is housed within a radiation station 114, etc. In addition to protecting the components from damage, the stations, in some examples, also serve other benefits. For example, the curing radiation station 114 limits what part(s) of the transfer material 104 and image 110 are exposed during the curing process. The stations may be fixedly attached to a track or chassis of the printing system 100. The transfer material 104 is moved in relation to the printer head 106, light source 112, etc., such that ink is deposited onto the transfer material 104.

In various embodiments, some or all of the components are controlled by a computer system 116. In some examples, the computer system 116 allows a user to input printing instructions and information, modify print settings, e.g., by changing cure settings, alter the printing process, etc.

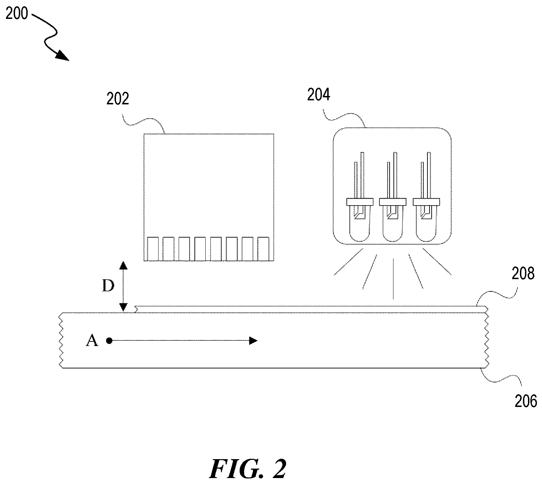

Figure 2 is a block diagram illustrating a side view of a printing system 200, including a printer head 202 and a light source 204, in accordance with one or more embodiments. In some examples, the printer head 202 includes distinct ink/color drums, e.g., cyan, magenta, yellow, and key (CMYK), or colored polyester ribbons that are deposited onto the surface of a transfer material 206. Path A represents the media feed direction, e.g., the direction in which the transfer material 206 travels during the printing process. Path D represents the distance between the printer head 202 and the surface of the transfer material 206.

In some embodiments, a light source 204 cures some or all of the ink 208 deposited onto the transfer material 206 by the printer head 202. In some examples, the light source 204 is configured to emit wavelengths of UV electromagnetic radiation of subtype V (UW), subtype A (UVA), subtype B (UVB), subtype C (UVC), or any combination thereof. Generally, UVV wavelengths are those wavelengths measured between 395 nanometers (nm) and 445 nm, UVA wavelengths measure between 315 nm and 395 nm, UVB wavelengths measure between 280 nm and 315 nm, and UVC wavelengths measure between 100 nm and 280 nm. However, one skilled in the art will recognize these ranges are somewhat adjustable. For example, some embodiments characterize wavelengths of 285 nm as UVC.

In some examples, the light source 204 is, for example, a fluorescent bulb, a light emitting diode (LED), a low-pressure, e.g., mercury (Hg), bulb, or an excited dimer (excimer) lamp/laser. Combinations of different light sources could be used in some embodiments. Generally, the light source 204 is selected to ensure that the curing temperature does not exceed the temperature at which the ink 208 begins to sublime. For example, a light source may be a UV LED lamp that generates low heat output and is used for a wider range of former types. UV LED lamps are associated with lower power consumption, longer lifetimes, and more predictable power output.

Alternatively, or additionally, other curing processes are also used, such as epoxy (resin) chemistries, flash curing, and electron beam technology. One skilled in the art will appreciate that many different curing processes could be adopted that utilize specific timeframes, intensities, rates, etc. In some embodiments, the intensity increases or decreases linearly or non-linearly, e.g., exponentially, logarithmically. In some embodiments, the intensity is altered using a variable resistor or alternatively by applying a pulse-width-modulated (PWM) signal to the diodes in the case of an LED light source. In some examples, the light is modulated using amplitude modulation, polarization modulation, frequency modulation (e.g., as in wavelength-division multiplexing (WDM)), phase modulation (e.g., angle phase control), temporal modulation, and/or the like.

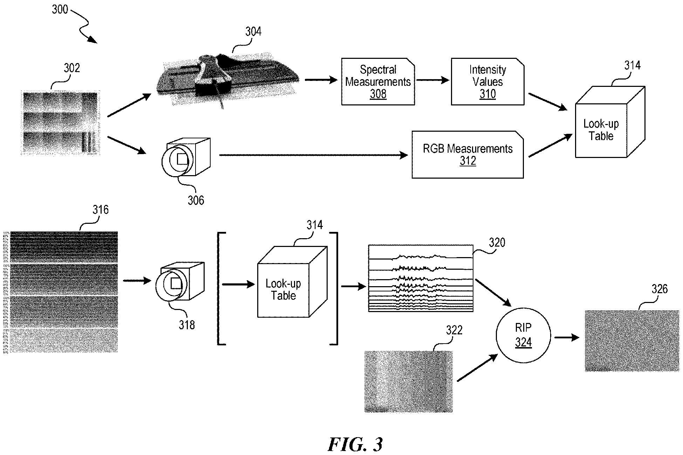

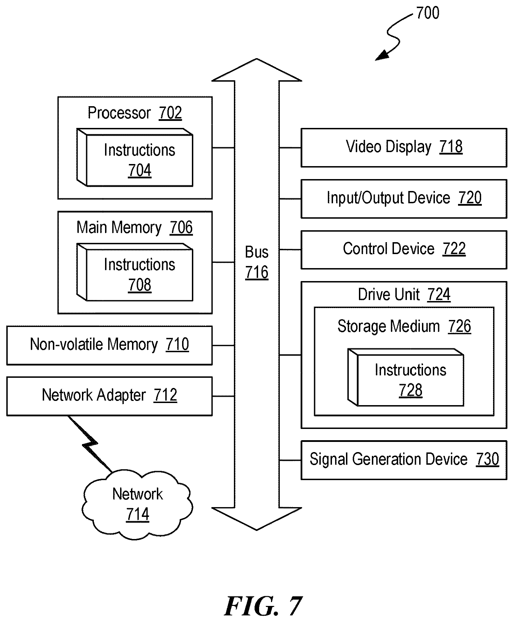

Figure 3 is a drawing illustrating an example environment 300 for printing solid areas, in accordance with one or more embodiments. The components of the environment 300 shown in Figure 3 include a target pattern 302, a spectrophotometer 304, an RGB sensor 306, spectral measurements 308, intensity values 310, RGB measurements 312, look-up table 314, uniformity bands 316, RGB sensor 318, intensity curves 320, uncorrected image 322, raster image processor 324, and corrected image 326. Additional components of the environment 300 include components of the computer system 700 illustrated and described in more detail with reference to Figure 7 and/or components of the printing system 100 illustrated and described in more detail with reference to Figure 1. Likewise, other embodiments include different and/or additional components, or be connected in a different way.

The system (e.g., printing system 100) prints a target pattern 302. Examples of the printing system are discussed further with reference to printing system 100 in Figure 1. The target pattern 302 is a predefined arrangement of colors or shapes. The target pattern 302 pattern can include a series of color patches or gradients with uniform color values that cover a full spectrum of colors the printing system can produce. The target pattern 302 is used as a reference to measure and calibrate the color output of the printing system. Using measurements taken from the target pattern 302 (e.g., by spectrophotometer 304), the printing system can identify any discrepancies in color density, such as banding or color shifts, between the target pattern and the uncorrected image 322, and make necessary adjustments (e.g., calibrating the intensity of printer nozzles) to ensure uniformity.

The spectrophotometer 304 is an instrument used to measure the intensity of light at different wavelengths. In the context of the printing system, the spectrophotometer 304 is used to measure the color values of the printed target pattern 302. The spectrophotometer 304 provides spectral measurements 308 by analyzing the light reflected or transmitted by the printed colors of the target pattern 302. The spectral measurements 308 is the data obtained from the spectrophotometer and allows the printing system to quantify the exact color output in terms of spectral data. The spectral measurements 308 can include the intensity of light absorbed or reflected by the printed colors at various wavelengths. Data within the spectral measurements 308 provides a profile of the color output of particular colors in the target pattern 302, including information about the hue, saturation, and brightness of each color. Using the spectrophotometer 304 to obtain the spectral measurements 308 allows the printing system to identify specific wavelengths where color deviations occur in the uncorrected image 322. The spectral measurements 308 can be converted into intensity values 310. Intensity values 310 represents the strength or brightness of the color of the particular colors in the target pattern 302.

The RGB sensor 306 is a device that detects the levels of red, green, and blue light in the printed target pattern. The RGB sensor 306 sensor captures the RGB measurements 312 (e.g., RGB values, color values) of the target pattern 302, which are used to determine the overall color accuracy and uniformity of the uncorrected image 322. The RGB sensor 306 operates by filtering the incoming light into its Red, Green, and Blue components (e.g., the RGB measurements 312) and measuring each component. The RGB measurements 312 represent colors in digital systems by combining Red, Green, and Blue light. Each of these three colors can have an intensity value ranging from 0 to 255. By mixing the three colors in different proportions, a wide spectrum of colors can be created. The format for representing an RGB color value can be represented as RGB(R, G, B), where R, G, and B are integers between 0 and 255. For example, pure red is represented as RGB(255, 0, 0), pure green as RGB(0, 255, 0), pure blue as RGB(0, 0, 255), black as RGB(0, 0, 0), and white as RGB(255, 255, 255). In some embodiments, the RGB sensor 306 is positioned in the printing system's optical path to continuously monitor the color output of the target pattern 302 during the printing process. The RGB measurements 312 provide a quantitative assessment of the color output.

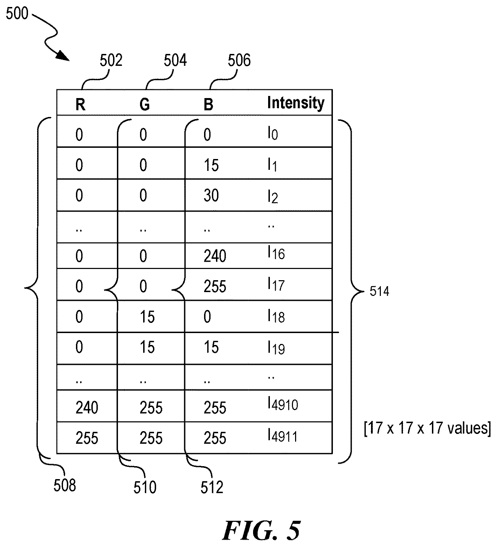

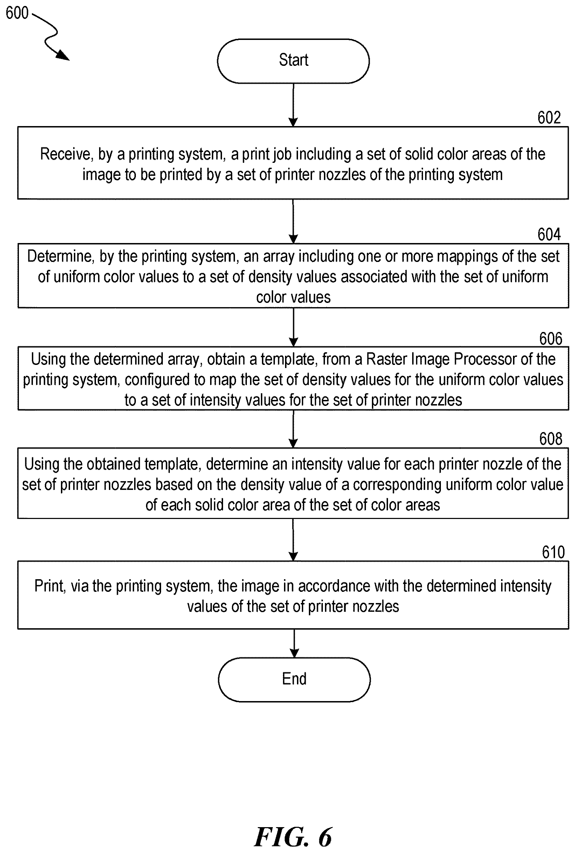

The look-up table 314 is a data structure generated from the intensity values 310 and the RGB measurements 312 that maps the uniform color values of the target pattern 302 to corresponding density values. The look-up table 314 is used by the printing system to determine the appropriate intensity values for the printer nozzles. Using the intensity values 310 and the RGB measurements 312, the printing system creates a mapping between the input color values and the desired output density values. This mapping allows the system to accurately reproduce colors by adjusting the intensity of the printer nozzles based on measured density values. Methods of generating the look-up table 314 are further discussed with reference to Figure 5 and Figure 6.

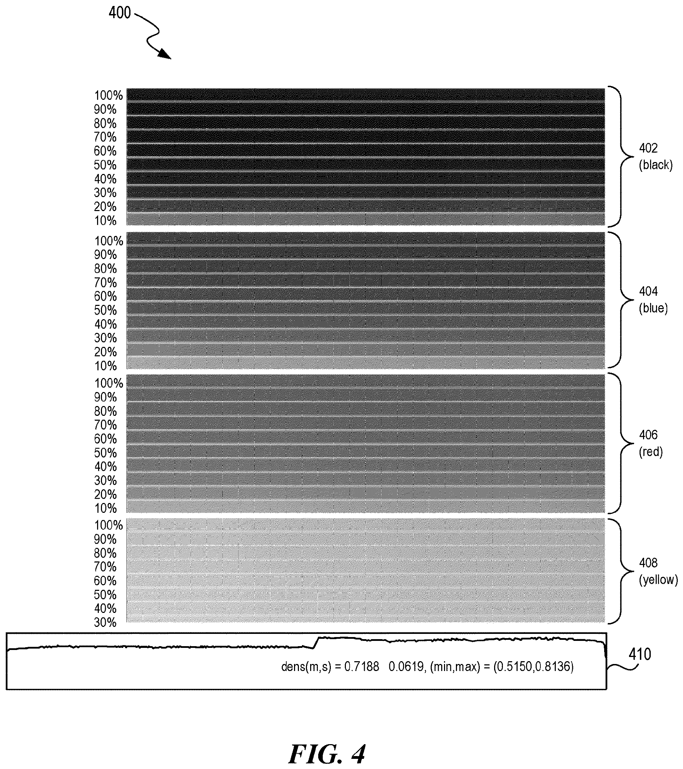

Uniformity bands 316 refer to specific horizontal sections of solid color areas, which can be large regions with a unique color value printed by one or more printer nozzles. For example, multiple uniformity bands 316 can be placed at varying densities and associated with a particular color. Further examples of uniformity bands are discussed with reference to Figure 4. Methods of obtaining the uniformity bands 316 are further discussed with reference to Figure 4 and Figure 6. The RGB sensor 318 is the same as or similar to RGB sensor 306 and is used to capture RGB measurements of the uniformity bands 316. The RGB sensor 318 can be positioned differently within the printing system than the RGB sensor 306 to monitor colors of the uniformity bands 316. In some embodiments, the RGB sensor 318 is in a separate printing system than RGB sensor 306.

Intensity curves 320 are graphical representations of the relationship between the color density values and the corresponding intensity values of each printer nozzle printing the density band. The number of intensity curves 320 can be equal to the number of uniformity bands 316. The intensity curves 320 graphically correlate the changes in intensity with the RGB measurements of the printer nozzles for a given density. Methods of generating the intensity curves 320 are further discussed with reference to Figure 4 and Figure 6.

The uncorrected image 322 is the initial printed image before any color calibration or adjustments are made. The uncorrected image 322 serves as a baseline for identifying color density variations and determining the necessary corrections. The uncorrected image 322 provides a reference for evaluating the color accuracy and uniformity of the printed output. By comparing the uncorrected image to the target pattern, the system can identify areas where the color output deviates from the desired values and adjust in the intensity of one or more printer nozzles to correct the deviation.

The raster image processor 324 is a component of the printing system that converts digital images into a format suitable for printing. The raster image processor 324 processes the image data and applies the necessary color corrections based on the intensity curves 320. The raster image processor 324 can convert the uncorrected image 322 into a raster format that can be printed by the printer nozzles. After the raster image processor 324 corrects the uncorrected image 322 using the intensity curves 320, the corrected image 326 is printed. The corrected image 326 is the final printed image after all color adjustments and calibrations have been applied by the raster image processor 324. The corrected image 326 represents the desired output with uniform color density and accurate color reproduction. By generating the intensity curves 320 using the spectral measurements 308 in the look-up table 314, the system can ensure that the corrected image 326 has a consistent color output, free from banding or other artifacts.

Figure 4 is a drawing illustrating an example color template 400 for detecting the solid areas, in accordance with one or more embodiments. The components of the color template 400 shown in Figure 4 include uniformity bands 402, 404, 406, 408, and intensity curve 410. In some embodiments, the uniformity bands 402, 404, 406, 408 can be uniformity bands 316. Additional components of the color template 400 include components of the computer system 700 illustrated and described in more detail with reference to Figure 7. Likewise, other embodiments include different and/or additional components, or be connected in a different way.

In the color template 400 depicted in Figure 4, the system generates intensity curves 410 that reflect any variations in color output of the uniformity bands 402, 404, 406, 408 from one or more printer nozzles of the system. The variations can be caused by, for example, manufacturing tolerances (e.g., the drops fired by some nozzles show more intensity than others). Uniformity bands 402, 404, 406, 408 refer to specific horizontal sections of a uniform color density. Uniformity bands 402, 404, 406, 408 can each be placed at varying densities (e.g., 100%, 95%, 90%, ... 10%, 5%) for each color channel. Uniformity bands 402, 404, 406, 408 can each be associated with a particular color. For example, in Figure 4, uniformity band 402 is associated with varying color densities of the color black, uniformity band 404 is associated with varying color densities of the color blue, uniformity band 406 is associated with varying color densities of the color red, and uniformity band 408 is associated with varying color densities of the color yellow. The color densities can be at predefined benchmarks (e.g., ten percent increments). In some embodiments, the predefined benchmarks can be adjusted by a user (e.g., adjusting from ten percent increments to five percent increments).

The color template 400 can be printed and scanned with RGB sensors (e.g., RGB sensor 318 in Figure 3). The vertical drops in each band (from each printer nozzle printing the corresponding band) can be evaluated and assigned unique value (float, between 0 and 1) for each printer nozzle. This generates the intensity curve 410 with as many points as printer nozzles in the corresponding band. The intensity curve 410 is a graphical representation of the relationship between the color density values and the corresponding intensity values.

For example, in Figure 4, the intensity curve 410 is characterized by a mean density value of 0.7188 and a standard deviation of 0.0619, indicating the average color density and its variability, respectively. The mean density value of 0.7188 represents the average color density achieved across different intensity levels. It is calculated by summing all the density values and dividing by the number of values. This value gives an overall indication of the typical color density produced by the printer. The standard deviation of 0.0619 measures the amount of variation or dispersion of the density values from the mean. A smaller standard deviation indicates that the density values are closely clustered around the mean, while a larger standard deviation indicates more spread out values. The minimum and maximum density values observed are 0.5150 and 0.8136, respectively. The minimum and maximum density values show the range of color densities achieved at different intensity levels. The minimum density value of 0.5150 is the lowest color density observed in the dataset. This value indicates the least amount of ink or toner deposited on the paper at a given intensity level. The maximum density value of 0.8136 is the highest color density observed in the dataset. This value indicates the most amount of ink or toner deposited on the paper at a given intensity level. Using the intensity curve 410, the system can identify the desired intensity settings for each printer nozzle, compensate the intensity of the printer nozzles in a subsequent printing job to ensure consistent color output in the solid color areas of the image to be printed.

Figure 5 is a drawing illustrating an example look-up table 500, in accordance with one or more embodiments. The components of the look-up table 500 shown in Figure 5 include color channels 502, 504, 506, color values 508, 510, 512, and intensity values 514. Additional components of the look-up table 500 include components of the computer system 700 illustrated and described in more detail with reference to Figure 7. Likewise, other embodiments include different and/or additional components, or be connected in a different way.

Color channels 502, 504, 506 refer to the individual color components that make up the final printed image. The color channels 502, 504, 506 can represent, for example, red, green, and blue. Each color channel is responsible for a specific range of wavelengths in the visible spectrum, and the combination of these channels produces the full range of colors in the printed image. Color values 508, 510, 512 represent the specific color measurements obtained from the printed image defined in terms of the color channels 502, 504, 506. Further examples of color channels 502, 504, 506 and color values 508, 510, 512 are discussed with reference to RGB measurements 312 in Figure 3.

Intensity values 514 represent the strength or brightness of the color values 508, 510, 512 from the printer nozzles. The intensity values 514 are used to ensure that the printed colors match the desired uniform color values. Adjusting the intensity values 514 helps in achieving consistent color density across the printed image. The intensity values 514 are controlled by varying the amount of ink or toner deposited by the printer nozzles. By fine-tuning the intensity values 514, the system can compensate for variations in nozzle performance and ensure that each color is printed with the correct density. Further examples of intensity values 514 are discussed with reference to intensity values 310 in Figure 3.

In order to generate the look-up table 500, the system can print a target pattern (e.g., target pattern 302) with a series of color patches of uniform and/or non-uniform shapes. The number of color patches to print can vary. For example, if *N* x *N* x *N* color patches are to be printed to sample the RGB space equally, the total number of color patches can depend on the value of *N.* 729 color patches would be printed if *N* equals 9 (since 9 x 9 x 9 is 729), whereas 4913 color patches would be printed if *N* equals 17 (since 17 x 17 x 17 is 4913). In some embodiments, the RGB colors are expressed with three bytes (R, G, B), with one byte (8 bits) for each color channel. Each color channel can be assigned a value between 0 and 255.

In some embodiments, the color patches in a uniform square shape with sides of at least 7 mm, so they can be scanned by the spectrophotometer, ensuring the RGB sensor value is representative enough. The target pattern is printed and measured with the embedded RGB sensors of the printer. The R, G, B values read for each patch can be recorded. The same target pattern can be measured with a spectrophotometer, and the spectral values of each patch are converted to intensity. The combinations of RGB values and intensities are used to generate a look-up table (e.g., look-up table 314 in Figure 3). The look-up table can be stored with other resources of the printing system or stored in an external system.

Figure 5 is a drawing illustrating an example look-up table 500, in accordance with one or more embodiments. The components of the look-up table 500 shown in Figure 5 include color channels 502, 504, 506, color values 508, 510, 512, and intensity values 514. Additional components of the look-up table 500 include components of the computer system 700 illustrated and described in more detail with reference to Figure 7. Other embodiments may include different and/or additional components or be connected in a different way.

Color channels 502, 504, 506 refer to the individual color components that make up the final printed image. The color channels 502, 504, 506 can represent, for example, red, green, and blue. Each color channel is responsible for a specific range of wavelengths in the visible spectrum, and the combination of these channels produces the full range of colors in the printed image. Color values 508, 510, 512 represent the specific color measurements obtained from the printed image defined in terms of the color channels 502, 504, 506. Further examples of color channels 502, 504, 506 and color values 508, 510, 512 are discussed with reference to RGB measurements 312 in Figure 3.

Intensity values 514 represent the strength or brightness of the color values 508, 510, 512 from the printer nozzles. The intensity values 514 are used to ensure that the printed colors match the desired uniform color values. Adjusting the intensity values 514 helps in achieving consistent color density across the printed image. The intensity values 514 are controlled by varying the amount of ink or toner deposited by the printer nozzles. By fine-tuning the intensity values 514, the system can compensate for variations in nozzle performance and ensure that each color is printed with the correct density. Further examples of intensity values 514 are discussed with reference to intensity values 310 in Figure 3.

Figure 6 is a flow diagram illustrating a process for achieving uniform density in the solid areas, in accordance with one or more embodiments. In some embodiments, the process of Figure 6 is performed using a printing system, e.g., the printing system of environment 300 illustrated and described in more detail with reference to Figure 3. In other embodiments, the process of Figure 6 is performed using components of the computer system 700 illustrated and described in more detail with reference to Figure 7. Likewise, other embodiments include different and/or additional steps, or are performed in a different order.

In step 602, the system receives, by a printing system, a print job including a set of solid color areas of the image to be printed by a set of printer nozzles of the printing system. The set of solid color areas is associated with a set of uniform color values. The printing system can include components such as print heads, ink reservoirs, and control circuitry to manage the printing process. The print job may be received from a user interface, a network connection, or a storage device. These uniform color values can be defined in a color space such as RGB (Red, Green, Blue) or CMYK (Cyan, Magenta, Yellow, Black). In some embodiments, the printing system's software parses the print job file, extracts the color information, and identifies the solid color areas that need to be processed.

In step 604, the system determines, by the printing system, an array including one or more mappings of the set of uniform color values to a set of density values associated with the set of uniform color values. The set of density values is measured using a spectrophotometer. In some embodiments, the array is a three-dimensional look-up table. The set of color values can include a first channel, a second channel, and a third channel. The first channel can indicate a level of red color, the second channel can indicate a level of green color, and the third channel can indicate a level of blue color. In some embodiments, the array is encoded in a binary format. The look-up table can be stored in the printer's firmware or software, allowing for quick reference during the printing process.

In some embodiments, the printing system is a first printing system. The system can determine the array by printing, by a second printing system, a set of targets. The targets can be test prints with known color values used to calibrate the system (e.g., target pattern 302). In some embodiments, the first printing system and the second printing system are different. Each target of the set of targets can be defined by a color value. The system measures, using one or more embedded sensors in the second printing system, the set of targets to capture the color value for each target. Embedded sensors (e.g., RGB sensors 306, 318) can include colorimeters or other optical sensors that provide real-time feedback on the printed output.

The system can measure, using the spectrophotometer (e.g., spectrophotometer 304) of the second printing system, the color values of the set of targets to obtain a set of spectral measurements for each target. Each spectral measurement of the set of spectral measurements can be associated with an intensity of light absorbed by the corresponding color value. The system can convert the set of spectral measurements to the set of density values. The system generates the array by aggregating the set of color values of the set of targets with the corresponding density values of the set of density values.

The system can smooth the set of color values and the set of density values. The smoothing can reduce noise of the set of color values and/or noise of the set of density values. For example, the system collects the raw color and density values, which may contain noise due to various factors such as sensor inaccuracies, environmental conditions, or inherent variability in the printing process. Smoothing algorithms, such as Gaussian smoothing or moving average filters, can be applied to reduce noise and ensure that the look-up table provides stable and accurate mappings. The system can apply a Gaussian function to the data, which weights the values based on the values' distance from a central point, averaging out the noise while preserving important features. The system can, in some embodiments, average a fixed number of neighboring data points, which can be implemented by iterating through the data set and calculating the average for each point based on the point's neighbors, lowering the impact of outliers and random fluctuations.

In some embodiments, the system interpolates the set of color values and the set of density values to generate the array in accordance with a set of predetermined values. Interpolation methods, such as linear interpolation or spline interpolation, can be used to fill in gaps in the look-up table by estimating unknown values that fall between known data points, ensuring that the look-up table covers the entire range of possible color values. The system can identify the two nearest known color values and their corresponding density values and calculate the intermediate unknown values using the linear equation. Spline interpolation can be implemented using algorithms such as cubic splines, which fit a cubic polynomial between each pair of known data points to ensure continuity and smoothness at the data points.

In step 606, using the determined array, the system obtains a template, from a raster image processor of the printing system, configured to map the set of density values for the uniform color values to a set of intensity values for the set of printer nozzles. The array can be stored within a raster image processor of the printing system. The template includes multiple bands containing a set of densities for each color channel of the set of color values. The bands can be oriented horizontally with respect to the xyz or have other orientations. In some embodiments, the raster image processor evaluates the intensity value of each printer nozzle of the set of printer nozzles based on the set of bands.

For each uniform color value, the raster image processor references the array to find the corresponding density value. The raster image processor can use the density value to calculate the appropriate intensity value for each printer nozzle. For example, the calculation can take into account factors such as the type of ink, the characteristics of the print media, and the specific capabilities of the printer nozzles.

In step 608, using the obtained template, the system determines an intensity value for each printer nozzle of the set of printer nozzles based on the density value of a corresponding uniform color value of each solid color area of the set of color areas. For example, when the user sends a job to the printer, the raster image processor can use the density value to compensate the intensity of each one of the printer nozzles.

In step 610, the system prints, via the printing system, the image in accordance with the determined intensity values of the set of printer nozzles. Each nozzle can deposit the amount of ink as determined by the raster image processor using the density value to achieve uniform color density across all solid areas. The printer's control software can send the calculated intensity values to the print heads, which execute the print job according to the parameters determined by the raster image processor.

### Computer System

Figure 7 is a block diagram illustrating an example computer system 700, in accordance with one or more embodiments. In some examples, the computer system 700 includes one or more central processing units ("processors") 702, main memory 706, non-volatile memory 710, network adapter 712 (e.g., network interface), video display 718, input/output devices 720, control device 722 (e.g., keyboard and pointing devices), drive unit 724 including a storage medium 726, and a signal generation device 730 that are communicatively connected to a bus 716. The bus 716 is illustrated as an abstraction that represents one or more physical buses and/or point-to-point connections that are connected by appropriate bridges, adapters, or controllers. In some examples, the bus 716, therefore, includes a system bus, a Peripheral Component Interconnect (PCI) bus or PCI-Express bus, a HyperTransport or industry standard architecture (ISA) bus, a small computer system interface (SCSI) bus, a universal serial bus (USB), an IIC (I2C) bus, or an Institute of Electrical and Electronics Engineers (IEEE) standard 1394 bus (also referred to as "Firewire").

In some examples, the computer system 700 shares a similar computer processor architecture as that of a desktop computer, tablet computer, personal digital assistant (PDA), mobile phone, game console, music player, wearable electronic device (e.g., a watch or fitness tracker), network-connected ("smart") device (e.g., a television or home assistant device), virtual/augmented reality system (e.g., a head-mounted display), or another electronic device capable of executing a set of instructions (sequential or otherwise) that specify action(s) to be taken by the computer system 700.

While the main memory 706, non-volatile memory 710, and storage medium 726 (also called a "machine-readable medium") are shown to be a single medium, the term "machine-readable medium" and "storage medium" should be taken to include a single medium or multiple media (e.g., a centralized/distributed database and/or associated caches and servers) that store one or more sets of instructions 728. The term "machine-readable medium" and "storage medium" shall also be taken to include any medium that is capable of storing, encoding, or carrying a set of instructions for execution by the computer system 700.

In general, the routines executed to implement the embodiments of the disclosure can be implemented as part of an operating system or a specific application, component, program, object, module, or sequence of instructions (collectively referred to as "computer programs"). The computer programs typically include one or more instructions (e.g., instructions 704, 708, 728) set at various times in various memory and storage devices in a computing device. When read and executed by the one or more processors 702, the instruction(s) cause the computer system 700 to perform operations to execute elements involving the various aspects of the disclosure.

Moreover, while embodiments have been described in the context of fully functioning computing devices, those skilled in the art will appreciate that the various embodiments are capable of being distributed as a program product in a variety of forms. The disclosure applies regardless of the particular type of machine or computer-readable media used to actually effect the distribution.

Further examples of machine-readable storage media, machine-readable media, or computer-readable media include recordable-type media such as volatile and non-volatile memory 710, floppy and other removable disks, hard disk drives, optical disks (e.g., Compact Disk Read-Only Memory (CD-ROMS), Digital Versatile Disks (DVDs)), and transmission-type media such as digital and analog communication links.

The network adapter 712 enables the computer system 700 to mediate data in a network 714 with an entity that is external to the computer system 700 through any communication protocol supported by the computer system 700 and the external entity. In some examples, the network adapter 712 includes a network adapter card, a wireless network interface card, a router, an access point, a wireless router, a switch, a multilayer switch, a protocol converter, a gateway, a bridge, a bridge router, a hub, a digital media receiver, and/or a repeater.

In some embodiments, the network adapter 712 includes a firewall that governs and/or manages permission to access/proxy data in a computer network and tracks varying levels of trust between different machines and/or applications. In some examples, the firewall is any number of modules having any combination of hardware and/or software components able to enforce a predetermined set of access rights between a particular set of machines and applications, machines and machines, and/or applications and applications (e.g., to regulate the flow of traffic and resource sharing between these entities). In some embodiments, the firewall additionally manages and/or has access to an access control list that details permissions including the access and operation rights of an object by an individual, a machine, and/or an application, and the circumstances under which the permission rights stand.

According to some embodiments, the techniques introduced here are implemented by programmable circuitry (e.g., one or more microprocessors), software and/or firmware, special-purpose hardwired (i.e., non-programmable) circuitry, or a combination of such forms. In some examples, special-purpose circuitry is in the form of one or more application-specific integrated circuits (ASICs), programmable logic devices (PLDs), field-programmable gate arrays (FPGAs), etc.

In the following, additional examples of the invention will be described which can be used individually or in combination with any of the features and functionalities and details described herein.

Example 1: A method for correcting density variation in solid areas of an image, comprising: receiving, by a printing system, a print job including a set of solid color areas of the image to be printed by a set of printer nozzles of the printing system, wherein the set of solid color areas is associated with a set of uniform color values; determining, by the printing system, an array including one or more mappings of the set of uniform color values to a set of density values associated with the set of uniform color values, wherein the set of density values is measured using a spectrophotometer; using the determined array, obtaining a template, from a raster image processor of the printing system, configured to map the set of density values for the uniform color values to a set of intensity values for the set of printer nozzles; using the obtained template, determining an intensity value for each printer nozzle of the set of printer nozzles based on the density value of a corresponding uniform color value of each solid color area of the set of color areas; and printing, via the printing system, the image in accordance with the determined intensity values of the set of printer nozzles.

Example 2: The method of example 1, wherein the printing system is a first printing system, and wherein determining the array comprises: printing, by a second printing system, a set of targets, wherein each target of the set of targets is defined by a color value; measuring, using one or more embedded sensors in the second printing system, the set of targets to capture the color value for each target; measuring, using the spectrophotometer of the second printing system, the color values of the set of targets to obtain a set of spectral measurements for each target, wherein each spectral measurement of the set of spectral measurements is associated with an intensity of light absorbed by the corresponding color value; converting the set of spectral measurements to the set of density values; and generating the array by aggregating the set of color values of the set of targets with the corresponding density values of the set of density values.

Example 3:The method of example 2, wherein the first printing system and the second printing system are different.

Example 4: The method of example 2 or 3, comprising: smoothing the set of color values and the set of density values, wherein the smoothing reduces one or more of: noise of the set of color values or noise of the set of density values.

Example 5: The method of one of examples 2 to 4, comprising: interpolating the set of color values and the set of density values to generate the array in accordance with a set of predetermined values.

Example 6: The method of one of examples 1 to 5, wherein the array is a three-dimensional look-up table.

Example 7: The method of one of examples 1 to 6, wherein the set of color values includes a first channel, a second channel, and a third channel, wherein the first channel indicates a level of red color, wherein the second channel indicates a level of green color, and wherein the third channel indicates a level of blue color.

Example 8: A printing system for correcting density variation in solid areas, comprising: at least one hardware processor; and at least one non-transitory memory storing instructions, which, when executed by the at least one hardware processor, cause the printing system to: receive, by the printing system, a print job including a set of solid color areas of an image to be printed by a set of printer nozzles of the printing system, wherein the set of solid color areas is associated with a set of uniform color values; determine, by the printing system, an array including one or more mappings of the set of uniform color values to a set of density values associated with the set of uniform color values, wherein the set of density values is measured using a spectrophotometer; using the determined array, obtain a template, from a raster image processor of the printing system, configured to map the set of density values for the uniform color values to a set of intensity values for the set of printer nozzles; using the obtained template, determine an intensity value for each printer nozzle of the set of printer nozzles based on the density value of a corresponding uniform color value of each solid color area of the set of color areas; and print, via the printing system, the image in accordance with the determined intensity values of the set of printer nozzles.

Example 9: The printing system of example 8, wherein the array is stored within the raster image processor of the printing system.

Example 10: The printing system of example 9, wherein the template includes a set of bands containing a set of densities for each color channel of the set of color values.

Example 11: The printing system of example 10, wherein the raster image processor is configured to evaluate the intensity value of each printer nozzle of the set of printer nozzles based on the set of bands.

Example 12: The printing system of one of examples 8 to 11, wherein the array is encoded in a binary format.

Example 13: The printing system of one of examples 8 to 12, wherein determining the intensity value for each printer nozzle of the set of printer nozzles is performed by a raster image processor of the printing system.

Example 14: The printing system of one of examples 8 to 13, wherein the array is a three-dimensional look-up table.

Example 15: A printing system for correcting density variation in solid areas, comprising: a plurality of printer nozzles, wherein each printer nozzle of the plurality of printer nozzles is configured to print an image in accordance with a corresponding intensity value; an array including one or more mappings of a set of color values to a set of density values of the set of color values, wherein the set of density values within the array is measured using a spectrophotometer; and a processing circuit configured to: receive, by the printing system, a print job including a set of solid color areas of the image to be printed by a set of printer nozzles of the printing system, wherein the set of solid color areas is associated with a set of uniform color values; using the array, determine the corresponding intensity value for each printer nozzle of the plurality of printer nozzles based on the density value of the corresponding uniform color value of each solid color area of the set of color areas, and print the image in accordance with the determined intensity values of the plurality of printer nozzles.

Example 16: The printing system of example 15, wherein the array is a three-dimensional look-up table.

Example 17: The printing system of example 15 or 16, wherein the set of color values includes a first channel, a second channel, and a third channel, wherein the first channel indicates a level of red color, wherein the second channel indicates a level of green color, and wherein the third channel indicates a level of blue color.

Example 18: The printing system of one of examples 15 to 17, wherein the array is stored within a raster image processor of the printing system.

Example 19: The printing system of example 18, wherein the raster image processor is configured to evaluate the corresponding intensity value of each printer nozzle of the set of printer nozzles.

Example 20: The printing system of one of examples 15 to 19, wherein determining the corresponding intensity value for each printer nozzle of the set of printer nozzles is performed by a raster image processor of the printing system.

The description and drawings herein are illustrative and are not to be construed as limiting. Numerous specific details are described to provide a thorough understanding of the disclosure. However, in certain instances, well-known details are not described in order to avoid obscuring the description. Further, various modifications can be made without deviating from the scope of the embodiments.

The terms used in this specification generally have their ordinary meanings in the art, within the context of the disclosure, and in the specific context where each term is used. Certain terms that are used to describe the disclosure are discussed above, or elsewhere in the specification, to provide additional guidance to the practitioner regarding the description of the disclosure. For convenience, certain terms may be highlighted, for example using italics and/or quotation marks. The use of highlighting has no influence on the scope and meaning of a term; the scope and meaning of a term is the same, in the same context, whether or not it is highlighted. It will be appreciated that the same thing can be said in more than one way. One will recognize that "memory" is one form of a "storage" and that the terms may on occasion be used interchangeably.

Consequently, alternative language and synonyms may be used for any one or more of the terms discussed herein, but no special significance is to be placed upon whether or not a term is elaborated or discussed herein. Synonyms for certain terms are provided. A recital of one or more synonyms does not exclude the use of other synonyms. The use of examples anywhere in this specification including examples of any term discussed herein is illustrative only and is not intended to further limit the scope and meaning of the disclosure or of any exemplified term. Likewise, the disclosure is not limited to various embodiments given in this specification.

It is to be understood that the embodiments and variations shown and described herein are merely illustrative of the principles of this invention and that various modifications may be implemented by those skilled in the art.

## Claims

1. A method for correcting density variation in solid areas of an image, comprising:
receiving, by a printing system, a print job including a set of solid color areas of the image to be printed by a set of printer nozzles of the printing system,
wherein the set of solid color areas is associated with a set of uniform color values;
determining, by the printing system, an array including one or more mappings of the set of uniform color values to a set of density values associated with the set of uniform color values,
wherein the set of density values is measured using a spectrophotometer;
using the determined array, obtaining a template, from a raster image processor of the printing system, configured to map the set of density values for the uniform color values to a set of intensity values for the set of printer nozzles;
using the obtained template, determining an intensity value for each printer nozzle of the set of printer nozzles based on the density value of a corresponding uniform color value of each solid color area of the set of color areas; and
printing, via the printing system, the image in accordance with the determined intensity values of the set of printer nozzles.

2. The method of claim 1, wherein the printing system is a first printing system, and wherein determining the array comprises:
printing, by a second printing system, a set of targets,
wherein each target of the set of targets is defined by a color value;
measuring, using one or more embedded sensors in the second printing system, the set of targets to capture the color value for each target;
measuring, using the spectrophotometer of the second printing system, the color values of the set of targets to obtain a set of spectral measurements for each target,
wherein each spectral measurement of the set of spectral measurements is associated with an intensity of light absorbed by the corresponding color value;
converting the set of spectral measurements to the set of density values; and
generating the array by aggregating the set of color values of the set of targets with the corresponding density values of the set of density values.

3. The method of claim 2, wherein the first printing system and the second printing system are different.

4. The method of claim 2 or 3, comprising:
smoothing the set of color values and the set of density values,
wherein the smoothing reduces one or more of: noise of the set of color values or noise of the set of density values.

5. The method of one of claims 2 to 4, comprising:
interpolating the set of color values and the set of density values to generate the array in accordance with a set of predetermined values.

6. The method of one of claims 1 to 5, wherein the array is a three-dimensional look-up table.

7. The method of one of claims 1 to 6,
wherein the set of color values includes a first channel, a second channel, and a third channel,
wherein the first channel indicates a level of red color,
wherein the second channel indicates a level of green color, and
wherein the third channel indicates a level of blue color.

8. A printing system for correcting density variation in solid areas, comprising:
at least one hardware processor; and
at least one non-transitory memory storing instructions, which, when executed by the at least one hardware processor, cause the printing system to:
receive, by the printing system, a print job including a set of solid color areas of an image to be printed by a set of printer nozzles of the printing system,
wherein the set of solid color areas is associated with a set of uniform color values;
determine, by the printing system, an array including one or more mappings of the set of uniform color values to a set of density values associated with the set of uniform color values,
wherein the set of density values is measured using a spectrophotometer;
using the determined array, obtain a template, from a raster image processor of the printing system, configured to map the set of density values for the uniform color values to a set of intensity values for the set of printer nozzles;
using the obtained template, determine an intensity value for each printer nozzle of the set of printer nozzles based on the density value of a corresponding uniform color value of each solid color area of the set of color areas; and
print, via the printing system, the image in accordance with the determined intensity values of the set of printer nozzles.

9. The printing system of claim 8, wherein the array is stored within the raster image processor of the printing system.

10. The printing system of claim 9, wherein the template includes a set of bands containing a set of densities for each color channel of the set of color values.

11. The printing system of claim 10, wherein the raster image processor is configured to evaluate the intensity value of each printer nozzle of the set of printer nozzles based on the set of bands.

12. The printing system of one of claims 8 to 11, wherein the array is encoded in a binary format.

13. The printing system of one of claims 8 to 12, wherein determining the intensity value for each printer nozzle of the set of printer nozzles is performed by a raster image processor of the printing system.

14. The printing system of one of claims 8 to 13, wherein the array is a three-dimensional look-up table.

15. A printing system for correcting density variation in solid areas, comprising:
a plurality of printer nozzles,
wherein each printer nozzle of the plurality of printer nozzles is configured to print an image in accordance with a corresponding intensity value;
an array including one or more mappings of a set of color values to a set of density values of the set of color values,
wherein the set of density values within the array is measured using a spectrophotometer; and
a processing circuit configured to:
receive, by the printing system, a print job including a set of solid color areas of the image to be printed by a set of printer nozzles of the printing system,
wherein the set of solid color areas is associated with a set of uniform color values;
using the array, determine the corresponding intensity value for each printer nozzle of the plurality of printer nozzles based on the density value of the corresponding uniform color value of each solid color area of the set of color areas, and
print the image in accordance with the determined intensity values of the plurality of printer nozzles.
